# EUROPEAN PATENT SPECIFICATION

(11) **EP 3 140 687 B1**
(45) Date of publication and mention of the grant of the patent: **11.07.2018**
(21) Application number: 14723070.0
(22) Date of filing: 09.05.2014
(51) Int. Cl.: G02B 6/255, G02B 6/42

(54) **AN OPTICAL FIBER CABLE END ADAPTER, A CABLE CONNECTION ASSEMBLY AND A METHOD FOR OBTAINING A CABLE CONNECTION**
GLASFASERKABELADAPTER ENDE, KABELVERBINDUNGSANORDNUNG UND VERFAHREN ZUM ERHALT EINER KABELVERBINDUNG
ADAPTATEUR D'EXTRÉMITÉ DE CÂBLE À FIBRE OPTIQUE, ENSEMBLE DE CONNEXION DE CÂBLE ET PROCÉDÉ PERMETTANT D'OBTENIR UNE CONNEXION DE CÂBLE

(43) Date of publication of application: 15.03.2017
(73) Proprietor: NKT HV Cables GmbH, 5400 Baden (CH)
(72) Inventor: ALTHINI, Petrus, 371 60 Lyckeby (SE)
(74) Representative: Kransell & Wennborg KB
(86) International application number: PCT/EP2014/059540
(87) International publication number: WO 2015/169388

(56) References cited:
- WO-A1-2007/092004
- JP-A- H06 221 928
- JP-A- H07 146 425
- US-A1- 2003 192 707
- US-B1- 6 496 625

## Description

### Technical field of the invention

The present disclosure relates to an end adapter assembly for an optical fiber cable, an optical fiber cable connection assembly for connection of an optical fiber cable to a device, and a method for obtaining an optical fiber cable connection between an optical fiber cable and a device.

### Background

The invention mainly concerns "Fiber In Metal Tube", FIMT, joints. FIMT is the process of encapsulating very long lengths of optical fibers within a hermetically sealed metal tube. The tube may contain individual or multiple optical fibers, e.g. as many as up to 100.

The FIMT comprises an inner metal tube or sheath containing the optical fibers and usually also an outer tube, concentric with the inner tube. The inner metal tube can be made of stainless steel or special alloys. Sometimes there can be more than one outer tube externally of the inner metal tube containing the fiber. Between the tubes there is usually a buffer or supporting material, e.g. fluorinated ethylene propylene such as Teflon, or a plastic or polymer resin. The outer tube may be made of metal or e.g. a polymer.

When two FIMT devices are to be joined, there is a risk of damaging the fibers inside if welding or soldering is used as a joining method for joining the inner metal tubes. Therefore FIMT's are mostly glued together or a shrink hose is applied over the joint. However, this does not result in a metallic sealed joint and there is a potential risk of diffusion, reduced tensile and torsional strength, as well as reduced electrical conductivity.

In US 5557697 and US 6496625 is described how two optical fiber cables are joined by splicing and how the area of the joint is covered by a joint tube that is welded to the outer tube of the respective cable. However, there is no possibility to control during welding that the temperature inside the joint tube and the outer metal tube is not too high to risk damage to the optical fibers, and there is no possibility to check after welding that the optical fibers have not been damaged. In these cases there is still also a risk that diffusion may occur into the joint area through the filling material between the inner tube and the outer tube of the cable.

In JP H03146911 is disclosed a method for holding an optical fiber below safety temperature and prevent it from damaging owing to heat in welding, by interposing an overheating mitigating material between the jacket tube and the optical fiber.

### Summary of the invention

The present disclosure aims at providing a FIMT joint with improved sealing properties. The invention provides an optical fiber cable end adapter assembly provided on an optical fiber cable according to claim 1. The end adapter may be made from a number of metal pipe sections having different diameters and which are welded or soldered together, or it may be machined from one piece of metal, e.g. in a lathe or spun out of a metal pipe. The dimensions of the different portions of the end adapter, which portions have different diameters, should be designed to reduce the area that is heated during welding or soldering onto the metal sheath of the optical fiber cable. The basic shape of the end adapter is a funnel, and it may have any combinations of straight and/or conical portions.

Another advantage of the funnel shaped end adapter is to provide access to the hollow interior of the end adapter, externally of the metal sheath. This results in the advantage of making it possible to use the hollow interior for different purposes as well as providing opportunities to control what happens inside the adapter during welding, as will be further explained below. The outer diameter of the second open end may be in the region of 2-4 times the diameter of the first open end.

By providing a temperature control arrangement inserted between the metal sheath and the optical fiber is obtained the advantage that it will be possible to weld or solder the end adaptor to the metal sheath, since it will be possible to control the temperature during the welding process and make sure that the temperature to which the optical fibers inside the metal sheath are exposed are not so high that the optical fibers risk being damaged. By welding or soldering it will thus be possible to obtain a diffusion tight metallic joint between the end adapter and the metal sheath. The welding area is usually fairly close to the end of the metal sheath, but it should not be too close to risk damaging the optical fiber coming out of the metal sheath.

According to one embodiment, the first temperature control arrangement may comprise a first cooling arrangement comprising a cooling pipe inserted between the metal sheath and the at least one optical fiber and surrounding said at least one optical fiber, at least underneath the first welding area. By means of this cooling pipe a cooling gas may be supplied that will help controlling the temperature during welding and keep the temperature low enough in order not to be harmful to the optical fibers.

In order to further protect the optical fiber, the cooling pipe that surrounds the optical fiber may extend for a distance outside of the end of the metal sheath. The external end of the cooling pipe should be closed to prevent gas flow in the wrong direction. The cooling pipe may be removable and thus removed after the welding/soldering has been performed, if necessary depending on the design. According to one feature, the first cooling arrangement may comprise a gas inlet by means of which a cooling gas can be supplied to the removable cooling pipe and around the at least one optical fiber, at least underneath the first welding area. As an alternative, the cooling pipe may be a pipe that is moved during the welding process such that as the welding proceeds a new cold part of the cooling pipe is always advanced into a position underneath the welding area.

According to another embodiment of the end adapter assembly, the first temperature control arrangement may comprise a temperature measuring device. This may be used as an alternative to the first cooling arrangement or in combination with it. Such a device may for example be a temperature sensor of any known suitable type, a thermocouple, a thermistor, a silver thermometer or similar. The temperature measuring device may e.g. be located directly on the optical fibers or on the inside of the metal sheath, in the vicinity of where the weld is produced. By measuring the temperature it is possible to control that the temperature during the welding process does not exceed a value that could be harmful for the fibers.

When the first cooling arrangement is combined with a temperature measuring device, an alternative location for the temperature measuring device is on the outside of the cooling pipe, under but close to the first welding area. In this case, the temperature measuring device can also be used to control that the temperature is not too low for obtaining a good weld, due to the cooling gas. The temperature measuring device may also be used to measure the temperature of the cooling gas inside the adapter.

According to another feature, the end adaptor may comprise a second temperature control arrangement inserted into the hollow interior of the end adapter at the second open end of the end adapter, and located externally of the metal sheath. This temperature control arrangement provides advantages corresponding to the advantages of the first temperature control arrangement. It also provides corresponding advantages when the end adapter assembly is mounted on an optical fiber cable and a joint tube is to be attached by welding onto the end adapter in the vicinity of its second open end.

According to one embodiment, the second temperature arrangement may comprise a second cooling arrangement comprising at least one cooling pipe inserted into the hollow interior of the end adapter and externally of the metal sheath, and wherein the at least one cooling pipe is connected to an inlet pipe for cooling gas. This had the advantage of providing additional cooling if required, e.g. when a joint tube is welded to the end adapter.

The second temperature control arrangement may alternatively comprise temperature measuring equipment, in analogy with the first temperature control arrangement. E.g. the temperature may be measured on the wall of the end adapter or of the air inside the end adapter in order to check that the temperature during welding is not too high so that there is a risk of damaging the optical fiber. The temperature measuring equipment may be used on its own or in one embodiment in may be combined with the second cooling arrangement. Either parts of the temperature measuring equipment may be removable.

Further, a vacuum hose may be inserted into the hollow interior, in order to reduce possible gas over-pressure that may occur during welding/soldering. The vacuum hose may be removable.

According to another aspect of the present invention there is provided an optical fiber cable connection as defined in claim 9. Through this it is possible to have the second welding area where the end adapter is welded/soldered to a joint tube remote from the first welding area. Since the second welding area is larger due to a larger diameter of the joint tube and the second open end of the end adapter, the generated heat will be higher. However, since it is at a distance from the first welding area where the other end of the end adapter is welded to the metal sheath and close to the heat sensitive optical fiber, the heat generated in the second welding area will only spread very slowly along the end adapter, and preferably the welding in the second welding area can be finalized before much heat is spread to the sensitive first welding area. An example of a suitable material for slow heat transfer is stainless steel that can be used for the adapter. In addition, a larger diameter of the end adapter at its second open end also has the effect of reducing radiation heat into the hollow interior of the end adapter. The welding/soldering of the joint tube to the end adapter provides the advantage of providing a diffusion tight metallic joint between the joint tube and the end adapter.

According to one embodiment, the device may be a second optical fiber cable comprising a metal sheath enclosing at least one optical fiber, provided with an end adapter assembly in accordance with any one of the claims defining such an assembly, and further having at least one optical fiber end part protruding from the metal sheath, wherein the optical fiber end part of the first optical fiber cable is spliced with an optical fiber end part of the second optical fiber cable whereby is obtained a spliced joint, wherein the joint tube is arranged over the spliced joint, and wherein the second open end of the joint tube is welded or soldered to the end adapter of the second optical fiber cable. The joint tube will then be welded or soldered to the end adapter mounted on the second optical fiber cable in the same way as the end adapter on the first optical fiber cable. Thus the entire interior of the joint tube will be sealed with diffusion tight metallic joints.

According to one feature, the first optical fiber cable may be adapted to receive the joint tube for storage externally thereon in a temporary position, and from where it is movable to its final position over the spliced joint where it is welded or soldered to the end adapters of the respective first and second optical fiber cables.

According to another embodiment, the second open end of the joint tube may be welded or soldered to an opening in a wall of the device thereby providing access into the device for the at least one optical fiber end part of the first optical fiber cable. This embodiment may be used for connection of optical fiber cables to many different types of devices in many different application areas, where preferably a hermetic metallic seal is required. Examples of application areas are measuring by means of optical fiber cables in e.g. oil tanks, electric power installations; information transfer, e.g. fiber or signal amplifiers. For example the device may be a joint box for connection of one or more optical fiber cables, and wherein a splice joint is arranged in the box, or a loop box, or a connection box, or a repair joint box where fiber overlength is handled.

Further, the joint tube may be provided with at least one removable external cooling sleeve. This may be configured as a sleeve surrounding part of the joint tube and providing for a gap between the joint tube and the sleeve into which a cooling gas can be supplied. This will provide for additional cooling if required.

According to another aspect of the present invention there is provided a method for obtaining an optical fiber cable connection as defined in claim 15. The advantages of this method correspond to the advantages already described above in connection with the end adapter assembly and the cable connection assembly.

According to one embodiment, the method may comprise providing the device in the form of a second optical fiber cable comprising a metal sheath enclosing at least one optical fiber cable, and preparing the end of the second optical fiber cable in analogy with the end of the first optical fiber cable and mounting an end adapter assembly, according to any one of the claims defining and end adapter assembly, on said end of the second optical fiber cable, and welding or soldering the end adapter to the metal sheath in a first welding area of the second optical fiber cable, while controlling the temperature at said first welding area by means of the first temperature control arrangement, optionally removing the first temperature control arrangement, splicing an optical fiber end part of the first optical fiber cable with an optical fiber end part of the second optical fiber cable and obtaining a splice joint, mounting the joint tube over the spliced joint, and welding or soldering the second open end of the joint tube to an external surface of the end adapter of the second optical fiber cable, in a second welding area.

According to another embodiment, the method is further defined wherein the preparing of a joint tube to be mountable over at least a part of the end adapter and the at least one optical fiber end part of the optical fiber cable is followed by welding or soldering the second open end of the joint tube to an opening in a wall of the device, and inserting the at least one optical fiber end part of the optical fiber cable into the device, via the joint tube, prior to mounting the joint tube over at least a part of the end adapter and welding or soldering the first open end of the joint tube to an external surface of the end adapter in a second welding area.

The method may further comprise controlling the temperature in the hollow interior of the end adapter during welding in the second welding area, by means of a second temperature control arrangement. Through this is obtained that the metal sheath and the optical fiber is further protected from heat during welding in the second area.

According to a further feature, the method may comprise filling the second open end of the end adapter with a filling material. This has the advantage of protecting the concerned area from any breakage risks.

According to yet another feature, the method may comprise placing a shrink tube over the joint tube.

Further features and advantages of the invention will also become apparent from the following detailed description of embodiments.

### Brief description of the drawings

A detailed description of the present invention and embodiments thereof, given as examples only, will now be made with reference to the accompanying schematic drawings, in which:
Fig. 1 is a schematic illustration showing an optical fibre cable according to the present invention;
Fig. 2 is a schematic illustration of an embodiment of an end adapter, according to the present invention;
Fig.3a is a schematic illustration of an embodiment of an end adapter assembly mounted on an end of an optical fiber cable, in cross section;
Fig.3b is a schematic illustration of another embodiment of an end adapter assembly mounted on an end of an optical fiber cable, in cross section;
Fig.3c is a schematic illustration of a yet another embodiment of an end adapter assembly mounted on an end of an optical fiber cable, in cross section;
Fig. 4 is a schematic illustration of cooling pipes for the end adapter assembly;
Fig. 5 is a schematic illustration of two optical fiber cables with spliced fibers;
Fig. 6 is a schematic illustration of two joined optical fiber cables;
Fig. 7 is a schematic, enlarged view, in cross section, of an end of an optical fiber cable with an end adapter prepared for soldering to a joint tube;
Fig. 8 is a schematic, enlarged view, in cross section, of an optical fiber cable provided with an end adapter assembly according to the present invention;
Fig. 9 is a schematic view of an optical fiber cable provided with an end adapter assembly according to the present invention and further provided with a shrink tube, and
Figs. 10a - 10d are schematic illustrations of different embodiments of cable connection assembly applications according to the present invention; and
Fig. 11 is a schematic diagram illustrating a method according to the present invention.

### Detailed description

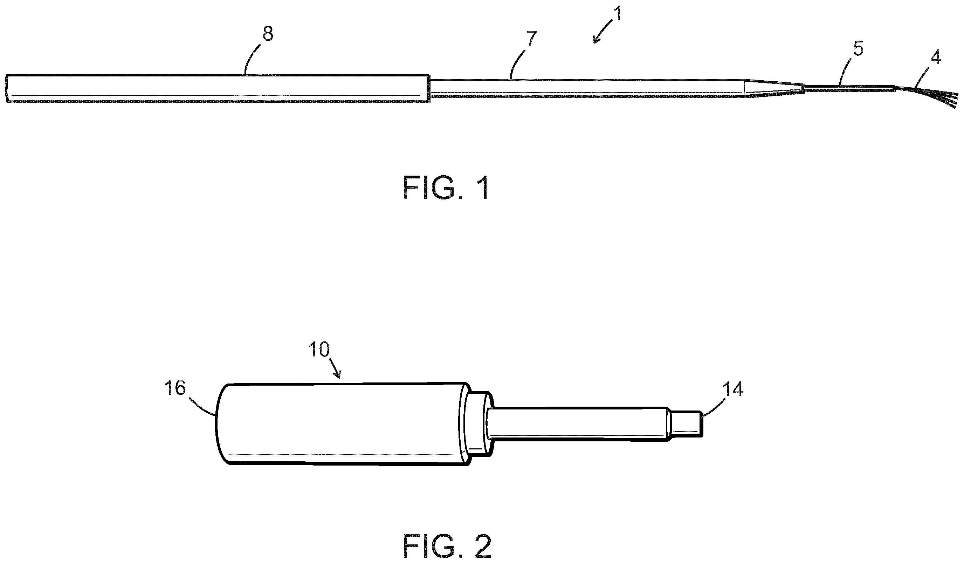

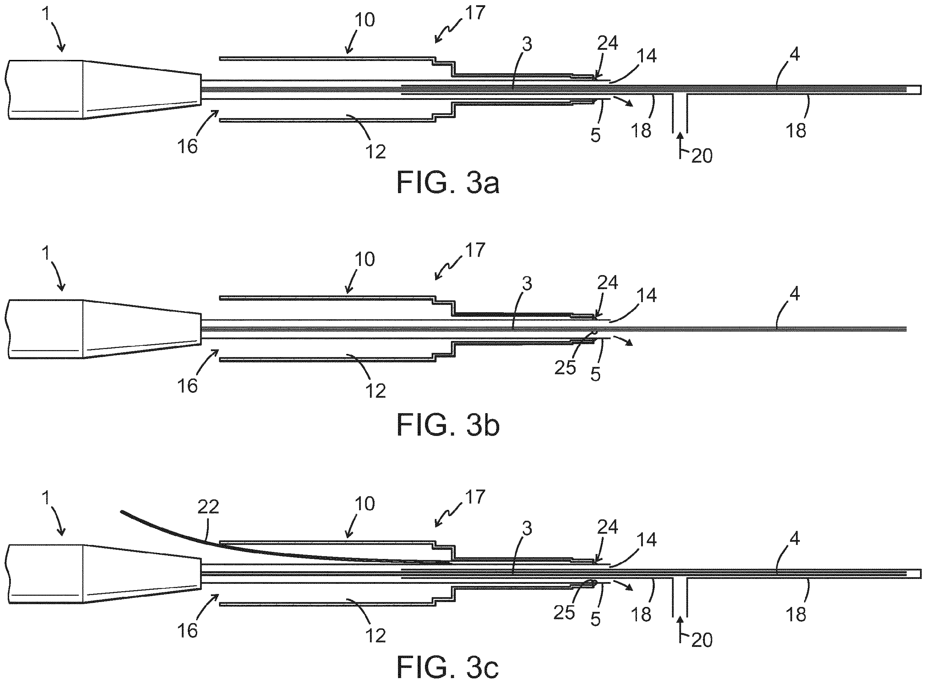

Fig. 1 is a schematic illustration showing an optical fiber cable 1 according to the present invention, of the Fiber In Metal Tube type, FIMT. The optical fiber cable 1 comprises optical fibers 3 that are arranged inside a metal sheath 5, see also Fig. 3. Externally of the metal sheath there may be arranged an outer tube 8. The metal sheath 5 and the outer tube 8 are arranged concentric with each other. Generally, the outer tube of an FIMT may e.g. be of a metal or a non-metal material such as a polymer.

In Fig. 2 is shown an embodiment of an optical fiber cable end adapter 10 according to the present invention. The end adapter 10 has a hollow interior 12 and two open ends 14, 16. The hollow interior 12 (see Fig. 3) is adapted to receive a metal sheath 5 with the optical fibers 3 of an optical fiber cable. The first open end 14 has a smaller diameter than the second open end 16. The first open end 14 has an inner diameter that is only slightly larger than the outer diameter of the metal sheath 5 of an optical fiber cable, in order to make it possible to weld or solder the first open end 14 of the adaptor 10 to the outside of the metal sheath 5. The inner diameter of the first open end is chosen such that the end adaptor can be snugly fit over the metal sheath while still allowing the adaptor to be mounted on the optical fiber cable by sliding it onto the free end of the an optical fiber cable. The second open end 16 of the adapter 10 has a larger inner diameter as will be explained later. The adapter may for example be manufactured by welding together several pipes having different diameters or it may be manufactured by machining in e.g. a lathe of a solid piece of metal. It may have a shape with several straight sections of different diameters, as shown in Fig. 2, or it may have an at least partly conical shape. Generally, it can be described as having a funnel shape. This shape is chosen in order to optimize heat transfer conditions.

Fig. 3 shows an end adapter assembly 17 comprising an end adapter 10 mounted onto an end of an optical fiber cable 1. A certain length of the optical fiber cable has been freed from its outer tube 8 and the metal sheath 5 is exposed. The exposed length of the metal sheath should have a length that is somewhat longer than the adapter 10. For example, the adapter may have a length in the region of 50-100 mm. The end adapter 10 is mounted concentrically with and surrounds the metal sheath 5. Usually, there is some space available between the optical fibers 3 and the internal wall of the metal sheath 5. Advantageously, this space is used to accommodate a first temperature control arrangement that has the function of controlling the temperature in the vicinity of the optical fibers during the welding process when the first open end 14 of the adaptor 10 is welded to the outside of the metal sheath 5. According to a first embodiment, such a temperature control arrangement comprises a first cooling arrangement; according to a second embodiment, such a temperature control arrangement comprises a temperature measuring device; and according to a third embodiment such a temperature control arrangement comprises a combination of a first cooling arrangement and a temperature measuring device.

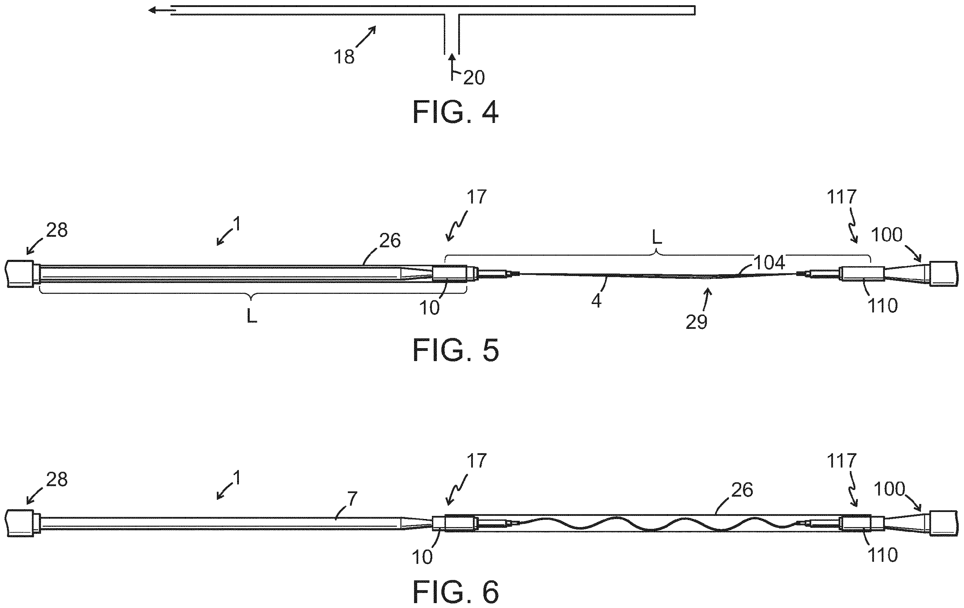

According to the first embodiment shown in Fig. 3a, a first cooling arrangement comprising a cooling pipe 18 may be provided, which is mounted over the free end of the optical fibers and further inserted into the metal sheath 5. The cooling pipe, as shown in Fig. 4, is provided with an inlet 20 for cooling gas in order to be able to supply a cooling gas into the pipe 18 and thereby protect the optical fibers 3 from heat during the operation when the adapter 10 is welded onto the metal sheath 5, at a first welding area 24. The end of the cooling pipe that is intended to be located inside the metal sheath 5 is open. The other end of the cooling pipe that encloses the optical fibers outside of the adapter is closed in order to prevent cooling gas flow in the wrong direction. The length of this cooling pipe can vary depending on the desired length of the optical fibers and the different conditions from case to case. Optionally, there may also be provided a vacuum hose 22 (cf. Fig. 3c) into the hollow interior of the end adapter 10 with the function of reducing cooling gas over pressure in the welding area, when the air inside is heated during welding. In Fig. 3a is also illustrated the first welding area 24, where the first open end 14 of the adapter 10 is welded onto the external surface of the metal sheath 5, at a distance from the end of the metal sheath where the optical fibers exit the sheath. This cooling arrangement is configured to be removable after welding of the end adapter 10 to the metal sheath 5.

According to the second embodiment, illustrated in Fig. 3b, the temperature control arrangement comprises a temperature measuring device 25. Such a device may for example be a temperature sensor of any known suitable type, a thermocouple, a thermistor, a silver thermometer or similar. The temperature measuring device 25 may e.g. be located directly on the fibers or on the inside of the metal sheath 5, in the vicinity of where the weld 24 is produced. By measuring the temperature it is possible to control that the temperature during the welding process does not exceed a value that could be harmful for the fibers.

According to the third embodiment, illustrated in Fig. 3c, the first cooling arrangement shown in Fig. 3a is combined with a temperature measuring device 25. In Fig. 3c the temperature measuring device 25 is shown as located on the inside of the metal sheath 5, but an alternative location for the temperature measuring device is on the outside of the cooling pipe, in the area under the weld 24. In this case, the temperature measuring device can also be used to control that the temperature is not too low for obtaining a good weld, due to the cooling gas. The temperature measuring device may also be used to measure the temperature of the cooling gas inside the adapter.

Generally, the first temperature control arrangement may be removable depending on its embodiment, or it may be left in place after welding.

In Figs. 5 and 6 is schematically illustrated an embodiment of an optical fiber cable connection assembly according to the invention. In this embodiment, the optical fiber cable 1 is connected to a device, which device is in the form of another optical fiber cable 100. In Fig. 5 are illustrated two optical fiber cables 1, 100 onto the ends of which respective end adapter assemblies 17, 117 according to the present invention have been mounted. The ends of the respective optical fiber cable 1, 100 have been prepared by removing the metal sheath 5 from a length of optical fiber cable thereby freeing the optical fibers 3, 103, and obtaining at least one optical fiber end part 4, 104, protruding from the respective metal sheath. Before joining the optical fiber end parts 4, 104 of the respective optical fiber cables 1, 100, a joint tube 26 is installed. The joint tube is a tube made of metal with two open ends. The purpose of the joint tube is to later on be mounted over the spliced optical fiber end parts 4, 104 and the respective end adapters 10, 110. However, in order to make this possible, the joint tube must be mounted temporarily before the optical fibers are spliced. Thus, the joint tube 26 is pushed over the ends of the optical fibers 3 and the end adapter 10 of one of the optical fiber cables 1 in order for it to be stored in a temporary location on that optical fiber cable, until the final operation steps can be performed. The joint tube 26 has an inner diameter that is only slightly larger than the outer diameter of the end adapter 10. The optical fiber cable onto which it is to be temporarily mounted must have been subjected to some preparations for this to be possible. For example, a section 7 of the outer tube 8 may have to be machined down for a length L corresponding to the length of the joint tube 26. Also, if an additional protective shrink tube 28 is to be used over the joint tube 26 after welding, such a shrink tube must also be temporarily stored on at least one of the optical fiber cables before the optical fiber end parts 4, 104 are spliced, and the optical fiber cable must be adapted to be able to temporarily accommodate such a shrink tube. When the joint tube 26 and the optional shrink tube 28 have been located at their temporary storage places, the respective optical fiber end parts 4, 104 of the optical fiber cables should be free and they can be spliced together, as shown in Fig. 5, forming a splice joint 29. Their axial positioning should also be adjusted. When this has been done, the joint tube 26 may be moved from its temporary location on one of the optical fiber cables to its final location in which it covers the spliced optical fiber end parts 4, 104 as well as the two end adapters 10, 110 of the two FIMT's 1, 100. This is illustrated in Fig. 6.

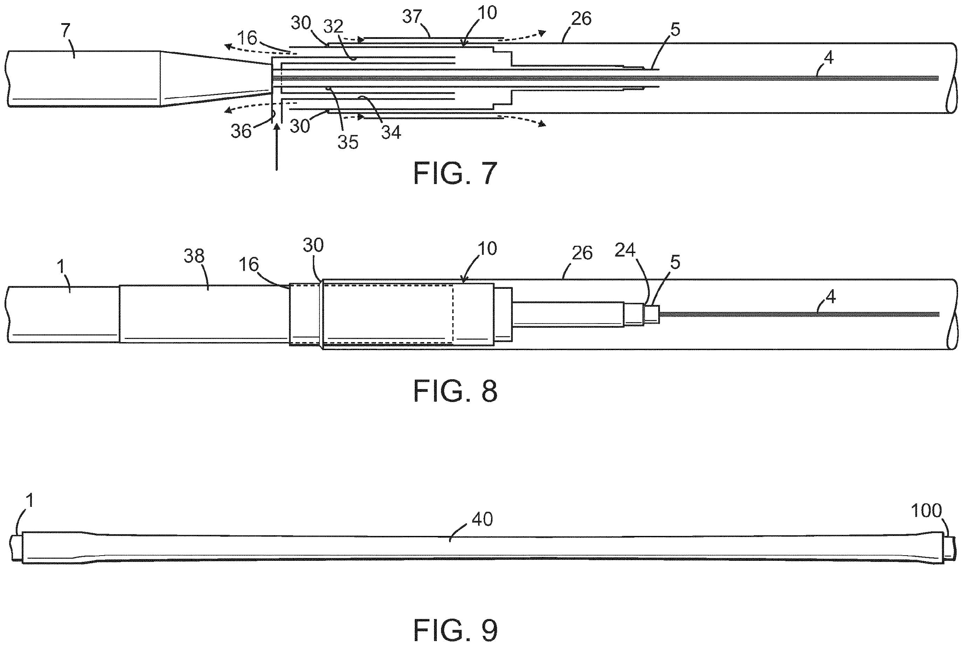

The joint tube 26 can now be fastened to the respective end adapter 10, 110 by welding the respective end of the joint tube to the end adapter in a second welding area 30 in the vicinity of, but at a distance from, the respective second open end 16 of the end adapter. This is illustrated in Fig. 7.

In Fig. 7 are also shown optional second temperature control arrangements. Such second temperature control arrangement may for example comprise a second cooling arrangement comprising at least two connected cooling pipes 32, 34 that are inserted into the hollow interior 12 of the adapter from its second open end 16. These cooling pipes are connected by an inlet pipe 36 for cooling gas, located externally of said second open end, and the cooling pipes reach into the adapter 10, past the second welding area 30, and they also have an open end inside the adapter. The purpose of the second cooling arrangement is to cool the metal sheath 5 in order to protect the optical fibers during welding. Alternatively, such a second cooling arrangement may have some kind of shield that directs the cooling gas towards the metal sheath inside the adapter, and prevents that radiated heat from the welding area reaches the metal sheath and the optical fibers inside it.

According to an alternative embodiment, the second temperature control arrangement may comprise temperature measuring equipment 35 that may be located e.g. on the exterior of the metal sheath 5, or on the inside of the end adapter, in the vicinity of the second weld area 30. This temperature measuring equipment may be used alone as a second temperature control arrangement, similar to what is described with regard to the temperature measuring device of the first temperature control arrangement, in relation to Fig. 3b. Alternatively, in another embodiment the temperature measurement equipment 35 may be used in combination with the second cooling arrangement 32, 34, 36, similar to what has been already described in relation to the first temperature control arrangement. Generally, the second temperature control arrangement may be removable depending on its embodiment, or it may be left in place after welding.

As an optional addition, there may also be provided a cooling sleeve 37 that is mounted such that it surrounds an external part of the joint tube 26. The cooling sleeve is configured such that a small gap is obtained between the joint tube and the cooling sleeve, into which gap a cooling gas may be supplied at one end of the cooling sleeve. The cooling gas will then flow along the joint tube and absorb generated heat from the joint tube during welding until it exits the gap at the opposite end of the cooling sleeve.

Fig. 8 illustrates how a filling material 38 or supporting material may be applied inside the second open end 16 of the end adapter 10, once the joint tube has been welded to the end adapter. This material may e.g. be glass fiber reinforced epoxy or a similar type of material that can have the function of stabilizing the optical fiber cable end inside the end adapter 10 after welding, and further along such that the filling material connects with the outer metal tube 8 of the optical fiber cable. This will help to prevent any breakage of the optical fiber cable 1 in the different transition areas.

Finally, a shrink tube 40 may be applied over the entire joint, covering not only the joint tube but also the neighbouring areas of the respective optical fiber cables 1, 100.

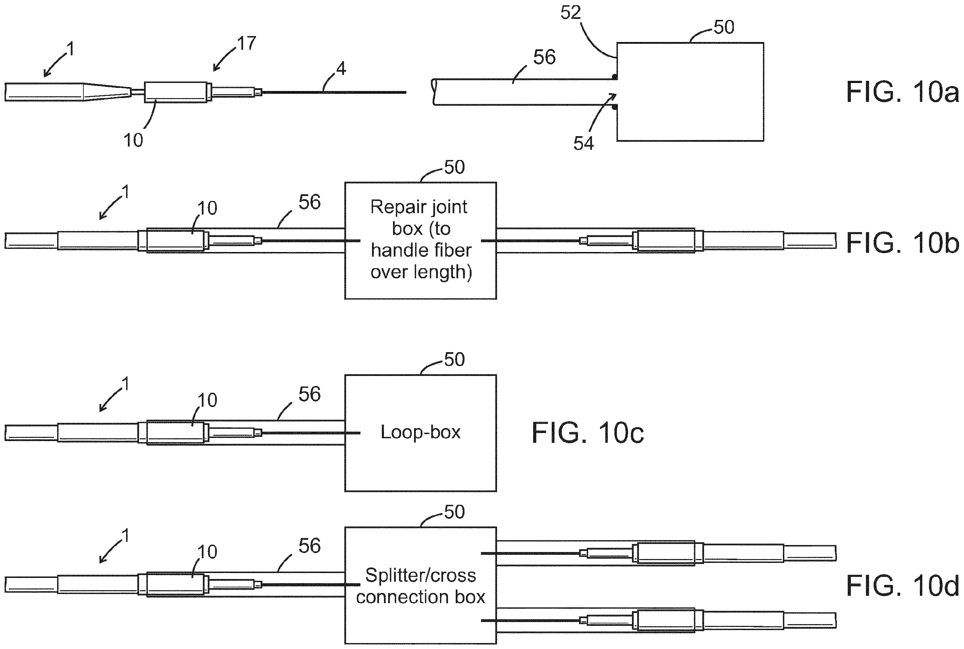

In Figs. 10a-10d are illustrated alternative embodiments where the end adapter assembly according to the present invention may be used. The end adapter assembly 17 and the cable connection assembly with the joint tube 26 may not only be used for a splice joint between two optical fiber cables, but it may in reality be used for the connection of an optical fiber cable to almost any type of device or enclosure where it is of interest to connect an optical fiber cable. Examples of different applications have already been given above.

In Fig. 10a is illustrated a general example of an optical fiber cable connection assembly for connecting an optical fiber cable 1 to a general device 50. In this case, the joint tube 56 is mounted directly on the device 50, as shown in Fig. 10a, prior to being mounted on the end adapter on the optical fiber cable. The second open end of the joint tube 56, i.e. the end of the joint tube that is not intended for welding to the end adapter of the cable, is welded or soldered to an opening 54 in a wall 52 of the device 50. The joint tube in this case can be made shorter, i.e. only slightly longer than the end adapter. The end parts 4 of the optical fibers 3 of the optical fiber cable 1 are inserted into the device, via the joint tube 56, before the joint tube is welded to the end adapter of the optical fiber cable. Thereby, a hermetically sealed system can be obtained between the optical fiber cable 1 and the device 50. If for example the device 50 is a joint box the end part 4 of the optical fiber cable is spliced inside the device with the optical fiber of the device. As a final measure, the joint box is hermetically sealed in order to obtain metal sealing and a hermetically sealed system.

According to the third aspect, the invention comprises a method for obtaining an optical fiber cable connection, between a first optical cable 1 and a device 100, 50, which optical fiber cable 1 comprises a metal sheath 5 enclosing at least one optical fiber 3. The method comprises the following steps:
- preparing an end of the optical fiber cable 1 by removing the metal sheath 7 from a length of optical fiber cable and thereby obtaining at least one optical fiber end part 4 (A),
- mounting an end adapter assembly 17 according to the invention around the metal sheath 5 of said optical fiber cable, and welding or soldering the end adapter 10 to the metal sheath 5 in a first welding area 24, thereby obtaining a metal sealing, while controlling the temperature at the first welding area by means of the first temperature control arrangement (B),
- optionally removing the first temperature control arrangement (C), which may be necessary if it comprises cooling pipes,
- preparing a joint tube 26, 56, having a first and a second open end, to be mountable over at least a part of the end adapter and the at least one optical fiber end part 4 of the first optical fiber cable 1 (D),
- mounting said joint tube 26, 56 over at least a part of the end adapter 17 and the at least one optical fiber end part 4 of the optical fiber cable and welding or soldering the first open end of the joint tube to an external surface of the end adapter 10 in a second welding area 30 (E),
- optionally, controlling the temperature in the hollow interior 12 of the end adapter 10 during welding in the second welding area 30,
- welding or soldering the second open end of the joint tube to the device 100; 50 (F),
- optionally, filling the second open end 16 of the end adapter with a filling material 38 and further enclosing any free metal sheath between said second open end and any outer tube in said filling material.
- optionally, placing a shrink tube 40 over the joint tube and neighbouring areas of the respective optical fiber cables.

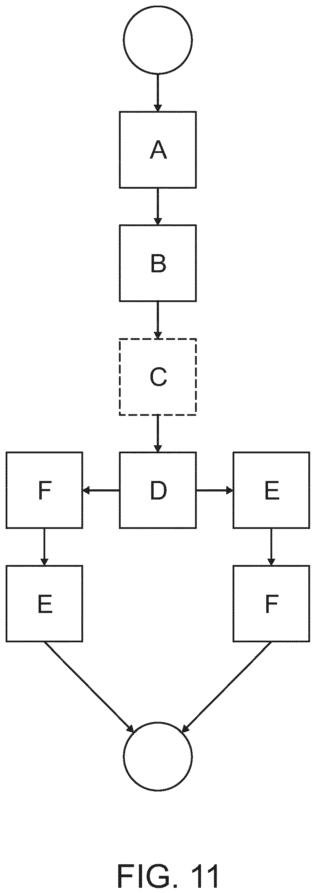

The main steps of the method are illustrated in Fig. 11.

If the method is used to join together two optical fiber cables 1, 100 it shall also comprise preparing the end of the second optical fiber cable 100 in analogy with the end of the first optical fiber cable and mounting an end adapter assembly 110 according to the invention on said end of the second optical fiber cable, and welding or soldering the end adapter to the metal sheath in a first welding area of the second optical fiber cable, while controlling the temperature at the first welding area by means of the first temperature control arrangement, optionally removing the first temperature control arrangement if necessary, splicing an optical fiber end part 4 of the first optical fiber cable 1 with an optical fiber end part 104 of the second optical cable 100 and obtaining a splice joint 29, mounting the joint tube over the spliced joint, and welding or soldering the second open end of the joint tube 26 to an external surface of the end adapter 110 of the second optical fiber cable 100, in a second welding area.

If, alternatively, the method is used for joining an optical fiber cable 1, provided with an end adapter, to a device 50, having the general form of an enclosure, a joint box etc. as has been described above, the method shall comprise welding or soldering the second open end of the joint tube 56 to an opening 54 in a wall 52 of the device 50, inserting the at least one optical fiber end part 4 of the optical fiber cable 1 into the device 50, via the joint tube 56, prior to mounting the joint tube over at least a part of the end adapter and welding or soldering the first open end of the joint tube to an external surface of the end adapter in a second welding area.

In the text above, mostly the word welding has been used. However, the word welding should also be interpreted as including the equivalent process of soldering and any other equivalent process that may be used in this context.

The invention shall not be considered limited to the illustrated embodiments, but can be modified and altered in many ways, as realised by a person skilled in the art, without departing from the scope defined in the appended claims.

## Claims

1. An optical fiber cable end adapter assembly (17, 117) provided on an optical fiber cable (1, 100), said optical fiber cable comprising an outer tube (8) and a metal sheath (5) enclosing at least one optical fiber (3, 103), said outer tube being arranged externally of the metal sheath, wherein the end adapter assembly comprises an end adapter (10, 110) of metal having a basic shape of a funnel and having a hollow interior (12) and a first open end (14) and a second open end (16) of which the first open end (14) has a smaller diameter than the second open end (16), the end adapter being disposed around the metal sheath of the optical fiber cable, wherein the first open end (14) of the end adapter is welded or soldered to an outer surface of the metal sheath (5) in a first welding area (24), and wherein the end adapter assembly further comprises a first temperature control arrangement (18, 20; 25) inserted between the metal sheath (5) and the at least one optical fiber (3).

2. The end adapter assembly according to claim 1, wherein the first temperature control arrangement comprises a first cooling arrangement comprising a cooling pipe (18) inserted between the metal sheath (5) and the at least one optical fiber (3) and surrounding said at least one optical fiber, at least underneath the first welding area (24).

3. The end adapter assembly according to claim 2, wherein the first cooling arrangement comprises a gas inlet (20) by means of which a cooling gas can be supplied to the cooling pipe (18) and around the at least one optical fiber (3), at least underneath the first welding area (24).

4. The end adapter assembly according to any one of claims 1-3, wherein the first temperature control arrangement comprises a temperature measuring device (25).

5. The end adapter assembly according to any one of claims 1-4, wherein it comprises a second temperature control arrangement (32, 34, 36; 35) inserted into the hollow interior (12) of the end adapter (10) at the second open end (16) of the end adapter (10), and located externally of the metal sheath (5).

6. The end adapter assembly according to claim 5, wherein the second temperature arrangement comprises a second cooling arrangement comprising at least one cooling pipe (32, 34) inserted into the hollow interior (12) of the end adapter (10) and externally of the metal sheath (5), and wherein the at least one cooling pipe is connected to an inlet pipe (36) for cooling gas.

7. The end adapter assembly according to any one of claims 5-6, wherein the second temperature control arrangement comprises temperature measuring equipment (35) inserted into the hollow interior.

8. The end adapter assembly according any one of claims 1-7, wherein a vacuum hose (22) is inserted into the hollow interior (12).

9. An optical fiber cable connection assembly adapted for connection of an optical fiber cable to a device, the connection assembly comprising a first optical fiber cable (1) comprising an outer tube (8) and a metal sheath (5) enclosing at least one optical fiber (3), said outer tube being arranged externally of the metal sheath, said optical fiber cable being provided with an end adapter assembly (17) according to any one of claims 1-8, and further having at least one optical fiber end part (4) protruding from the metal sheath, the connection assembly further comprising a joint tube (26, 56) arranged over at least a part of the end adapter and over the at least one optical fiber end part (4) protruding from the metal sheath, and which joint tube has a first open end that is welded or soldered to an external surface of the end adapter in a second welding area (30) and a second open end that is welded or soldered to the device (100, 50).

10. The optical fiber cable connection assembly according to claim 9, wherein the device is a second optical fiber cable (100) comprising a metal sheath enclosing at least one optical fiber (103), provided with an end adapter assembly (117) in accordance with any one of claims 1-8, and further having at least one optical fiber end part (104) protruding from the metal sheath, wherein the optical fiber end part (4) of the first optical fiber cable (1) is spliced with an optical fiber end part (104) of the second optical fiber cable (100) whereby is obtained a spliced joint (29), wherein the joint tube (26) is arranged over the spliced joint (29), and wherein the second open end of the joint tube is welded or soldered to the end adapter (110) of the second optical fiber cable (100).

11. The optical fiber cable connection assembly according to claim 10, wherein the first optical fiber cable (1) is adapted to receive the joint tube (26) for storage externally thereon in a temporary position, and from where it is movable to its final position over the spliced joint (29) where it is welded or soldered to the end adapters of the respective first and second optical fiber cables (1, 100).

12. The optical fiber connection assembly according to claim 9, wherein the second open end of the joint tube (56) is welded or soldered to an opening (54) in a wall (52) of the device (50) thereby providing access into the device for the at least one optical fiber end part (4) of the first optical fiber cable (1).

13. The optical fiber cable connection assembly according to claim 12, wherein the device (50) is a joint box for connection of one or more optical fiber cables.

14. The optical fiber cable connection assembly according to any one of claims 9-13, wherein the joint tube (26, 56) is provided with at least one removable external cooling sleeve (37).

15. A method for obtaining an optical fiber cable connection between a first optical fiber cable (1) and a device (50; 100), which optical fiber cable comprises an outer tube (8) and a metal sheath (5) enclosing at least one optical fiber (3, 103), said outer tube being arranged externally of the metal sheath, the method comprising:
- preparing an end of the optical fiber cable by removing the metal sheath from a length of optical fiber cable and thereby obtaining at least one optical fiber end part (A),
- mounting an end adapter assembly (17, 117) according to any one of claims 1-8 around the metal sheath of said optical fiber cable, and welding or soldering the end adapter to the metal sheath in a first welding area, while controlling the temperature at the first welding area by means of the first temperature control arrangement (B),
- optionally, removing the first temperature control arrangement (C),
- preparing a joint tube, having a first and a second open end, to be mountable over at least a part of the end adapter and the at least one optical fiber end part of the optical fiber cable (D),
- mounting said joint tube over at least a part of the end adapter and the at least one optical fiber end part of the optical fiber cable and welding or soldering the first open end of the joint tube to an external surface of the end adapter in a second welding area (E), and
- welding or soldering the second open end of the joint tube to the device (F).

16. The method according to claim 15, comprising providing the device in the form of a second optical fiber cable comprising a metal sheath enclosing at least one optical fiber, and preparing the end of the second optical fiber cable in analogy with the end of the first optical fiber cable and mounting an end adapter assembly according to any one of claims 1-8 on said end of the second optical fiber cable, and welding or soldering the end adapter to the metal sheath in a first welding area of the second optical fiber cable, while controlling the temperature at said first welding area by means of the first temperature control arrangement, optionally removing the first temperature control arrangement, splicing an optical fiber end part of the first optical fiber cable with an optical fiber end part of the second optical fiber cable and obtaining a splice joint, mounting the joint tube over the spliced joint, and welding or soldering the second open end of the joint tube to an external surface of the end adapter of the second optical fiber cable, in a second welding area.

17. The method according to claim 15, wherein the preparing of a joint tube to be mountable over at least a part of the end adapter and the at least one optical fiber end part of the optical fiber cable is followed by welding or soldering the second open end of the joint tube to an opening in a wall of the device, and inserting the at least one optical fiber end part of the optical fiber cable into the device via the joint tube, prior to mounting the joint tube over at least a part of the end adapter and welding or soldering the first open end of the joint tube to an external surface of the end adapter in a second welding area.

18. The method according to any one of claims 15-17, comprising controlling the temperature in the hollow interior of the end adapter during welding in the second welding area, by means of the second temperature control arrangement.

19. The method according to any one of claims 15-18, comprising filling the second open end of the end adapter with a filling material.

20. The method according to any one of claims 15-19, comprising placing a shrink tube over the joint tube.

## Patentansprüche

1. Optische Faserkabel-Endadaptergruppe (17, 117), die an einem faseroptischen Kabel (1, 100) vorgesehen ist, wobei das faseroptische Kabel ein äußeres Rohr (8) und einen Metallmantel (5) umfasst, der mindestens eine optische Faser (3, 103) umschließt, wobei das äußere Rohr extern zum Metallmantel angeordnet ist, wobei die Endadaptergruppe einen Endadapter (10, 110) aus Metall umfasst, der eine Grundform eines Trichters hat und ein hohles Inneres (12) und ein erstes offenes Ende (14) und ein zweites offenes Ende (16) hat, von denen das erste offene Ende (14) einen kleineren Durchmesser als das zweite offene Ende (16) hat, wobei der Endadapter rund um den Metallmantel des faseroptischen Kabels angeordnet ist, wobei das erste offene Ende (14) des Endadapters an die Außenfläche des Metallmantels (5) in einem ersten Schweißbereich (24) angeschweißt oder angelötet ist und wobei die Endadaptergruppe ferner eine erste Temperaturregelungsanordnung (18, 20; 25) umfasst, die zwischen dem Metallmantel (5) und der mindestens einen optischen Faser (3) eingeführt ist.

2. Endadaptergruppe nach Anspruch 1, wobei die erste Temperaturregelungsanordnung eine erste Kühlanordnung umfasst, die ein Kühlrohr (18) enthält, welches zwischen dem Metallmantel (5) und der mindestens einen optischen Faser (3) eingeführt wird und die mindestens eine optische Faser umgibt, zumindest unterhalb des ersten Schweißbereiches (24).

3. Endadaptergruppe nach Anspruch 2, wobei die erste Kühlanordnung einen Gaseinlass (20) umfasst, mit dem ein Kühlgas dem Kühlrohr (18) und rund um die mindestens eine optische Faser (3) zugeführt werden kann, zumindest unterhalb des ersten Schweißbereiches (24) .

4. Endadaptergruppe nach einem der Ansprüche 1 bis 3, wobei die erste Temperaturregelungsanordnung ein Temperaturmessgerät (25) enthält.

5. Endadaptergruppe nach einem der Ansprüche 1 bis 4, wobei sie eine zweite Temperaturregelungsanordnung (32, 34, 36; 35) umfasst, die in das hohle Innere (12) des Endadapters (10) am zweiten offenen Ende (16) des Endadapters (10) eingeführt wird und sich außerhalb des Metallmantels (5) befindet.

6. Endadaptergruppe nach Anspruch 5, wobei die zweite Temperaturregelungsanordnung eine zweite Kühlanordnung umfasst, die mindestens ein Kühlrohr (32, 34) enthält, das in das hohle Innere (12) des Endadapters (10) eingeführt wird und extern zum Metallmantel (5) ist und wobei das mindestens eine Kühlrohr mit einem Einlassrohr (36) für Kühlgas verbunden ist.

7. Endadaptergruppe nach einem der Ansprüche 5 bis 6, wobei die zweite Temperaturregelungsanordnung Temperaturmessausrüstung (35) umfasst, die in das hohle Innere eingeführt wird.

8. Endadaptergruppe nach einem der Ansprüche 1 bis 7, wobei ein Vakuumschlauch (22) in das hohle Innere (12) eingeführt wird.

9. Optische Faserkabel-Verbindungsgruppe zum Verbinden eines optischen Faserkabels mit einem Gerät, wobei die Verbindungsgruppe ein erstes optisches Faserkabel (1) umfasst, das ein äußeres Rohr (8) und einen Metallmantel (5) umfasst, der mindestens eine optische Faser (3) umschließt, wobei das äußere Rohr extern zum Metallmantel angeordnet ist, wobei das optische Faserkabel mit einer Endadaptergruppe (17) nach einem der Ansprüche 1 bis 8 versehen ist und ferner mindestens einen optischen Faserendteil (4) hat, der aus dem Metallmantel vorragt, wobei die Verbindungsgruppe ferner ein Verbindungsrohr (26, 56) umfasst, das über mindestens einem Teil des Endadapters und über dem mindestens einen optischen Faserendteil (4) angeordnet ist, der aus dem Metallmantel vorragt, und wobei das Verbindungsrohr ein erstes offenes Ende hat, das an eine Außenfläche des Endadapters in einem zweiten Schweißbereich (30) angeschweißt oder angelötet ist, und ein zweites offenes Ende, das an das Gerät (100, 50) angeschweißt oder angelötet ist.

10. Optische Faserkabel-Verbindungsgruppe nach Anspruch 9, wobei das Gerät ein zweites optisches Faserkabel (100) ist, das einen Metallmantel umfasst, der mindestens eine optische Faser (103) umschließt, mit einer Endadaptergruppe (117) nach einem der Ansprüche 1 bis 8 versehen ist und ferner mindestens einen optischen Faserendteil (104) hat, der aus dem Metallmantel vorragt, wobei der optische Faserendteil (4) des ersten optischen Faserkabels (1) mit einem optischen Faserendteil (104) des zweiten optischen Faserkabels (100) gespleißt ist, wobei eine gespleißte Verbindung (29) erhalten wird, wobei das Verbindungsrohr (26) oberhalb der gespleißten Verbindung (29) angeordnet ist und wobei das zweite offene Ende des Verbindungsrohres an den Endadapter (110) des zweiten optischen Faserkabels (100) angeschweißt oder angelötet ist.

11. Optische Faserkabel-Verbindungsgruppe nach Anspruch 10, wobei das erste optische Faserkabel (1) dafür ausgelegt ist, das Verbindungsrohr (26) zur Lagerung extern darauf in einer temporären Position aufzunehmen, und von wo aus es in seine Endposition über der gespleißten Verbindung (29) bewegt werden kann, wo es an die Endadapter der jeweiligen ersten und zweiten optischen Faserkabel (1, 100) angeschweißt oder angelötet wird.

12. Optische Faserverbindungsgruppe nach Anspruch 9, wobei das zweite offene Ende des Verbindungsrohres (56) an eine Öffnung (54) in einer Wand (52) des Gerätes (50) angeschweißt oder angelötet ist, wodurch es Zugang zum Gerät für den mindestens einen optischen Faserendteil (4) des ersten optischen Faserkabels (1) gewährt.

13. Optische Faserkabel-Verbindungsgruppe nach Anspruch 12, wobei das Gerät (50) eine Verbindungsbox zum Verbinden von einem oder mehreren optischen Faserkabeln ist.

14. Optische Faserkabel-Verbindungsgruppe nach einem der Ansprüche 9 bis 13, wobei das Verbindungsrohr (26, 56) mit mindestens einer entfernbaren externen Kühlhülse (37) versehen ist.

15. Verfahren zum Erhalten einer optischen Faserkabelverbindung zwischen einem ersten optischen Faserkabel (1) und einem Gerät (50; 100), wobei das optische Faserkabel ein Außenrohr (8) und einen Metallmantel (5) umfasst, der mindestens eine optische Faser (3, 103) umschließt, wobei das Außenrotor extern zum Metallmantel angeordnet ist, wobei das Verfahren umfasst:
- Vorbereiten eines Endes des optischen Faserkabels durch Entfernen des Metallmantels von einer Länge des optischen Faserkabels und dadurch Gewinnen von mindestens einem optischen Faserendteil (A),
- Montieren einer Endadaptergruppe (17, 117) nach einem der Ansprüche 1 bis 8 rund um den Metallmantel des optischen Faserkabels und Anschweißen oder Anlöten des Endadapters an den Metallmantel in einem ersten Schweißbereich, während gleichzeitig die Temperatur im ersten Schweißbereich mit der ersten Temperaturmessanordnung (B) kontrolliert wird,
- optionales Entfernen der ersten Temperaturkontrollanordnung (C),
- Vorbereiten eines Verbindungsrohres, das ein erstes und ein zweites offenes Ende hat, die über mindestens einem Teil des Endadapters und dem mindestens einen optischen Faserendteil des optischen Faserkabels (D) montierbar sein sollen,
- Befestigen des Verbindungsrohres über mindestens einem Teil des Endadapters und den mindestens einen optischen Faserendteil des optischen Faserkabels und Anschweißen oder Anlöten des ersten offenen Endes des Verbindungsrohres an eine Außenfläche des Endadapters in einem zweiten Schweißbereich (E), und
- Anschweißen oder Anlöten des zweiten offenen Endes des Verbindungsrohres an das Gerät (F).

16. Verfahren nach Anspruch 15, das das Bereitstellen des Gerätes in der Form eines zweiten optischen Faserkabels umfasst, welches einen Metallmantel hat, der mindestens eine optische Faser umschließt, und Vorbereiten des Endes des zweiten optischen Faserkabels in Analogie zum Ende des ersten optischen Faserkabels und Befestigen einer Endadaptergruppe nach einem der Ansprüche 1 bis 8 an dem Ende des zweiten optischen Faserkabels und Anschweißen oder Anlöten des Endadapters am Metallmantel in einem ersten Schweißbereich des zweiten optischen Faserkabels, dabei Kontrollieren der Temperatur im ersten Schweißbereich mittels der ersten Temperaturkontrollanordnung, optionales Entfernen der ersten Temperaturkontrollanordnung, Spleißen eines optischen Faserendteils des ersten optischen Faserkabels mit einem optischen Faserendteil des zweiten optischen Faserkabels und Erhalten einer gespleißten Verbindung und Anschweißen oder Anlöten des zweiten offenen Endes des Verbindungsrohres an eine Außenfläche des Endadapters des zweiten optischen Faserkabels in einem zweiten Schweißbereich.

17. Verfahren nach Anspruch 15, wobei dem Vorbereiten eines Verbindungsrohres, das über mindestens einem Teil des Endadapters und dem mindestens einen optischen Faserendteil des optischen Faserkabels montierbar sein soll, dem folgt das Anschweißen oder Anlöten des zweiten offenen Endes des Verbindungsrohres an eine Öffnung in einer Wand des Gerätes und das Einführen des mindestens einen optischen Faserendteils des optischen Faserkabels in das Gerät über dem Verbindungsrohr, vor dem Befestigen des Verbindungsrohres über mindestens einem Teil des Endadapters und Anschweißen oder Anlöten des ersten offenen Endes des Verbindungsrohres an eine Außenfläche des Endadapters in einem zweiten Schweißbereich.

18. Verfahren nach einem der Ansprüche 15 bis 17, das das Kontrollieren der Temperatur im hohlen Inneren des Endadapters während des Schweißens im zweiten Schweißbereich mittels der zweiten Temperaturkontrollanordnung umfasst.

19. Verfahren nach einem der Ansprüche 15 bis 18, das das Füllen des zweiten offenen Endes des Endadapters mit einem Füllmaterial umfasst.

20. Verfahren nach einem der Ansprüche 15 bis 19, das das Aufbringen eines Schrumpfschlauchs auf das Verbindungsrohr umfasst.

## Revendications

1. Ensemble adaptateur d'extrémité de câble à fibre optique (17, 117) prévu sur un câble à fibre optique (1, 100), ledit câble à fibre optique comprenant un tube extérieur (8) et une gaine métallique (5) renfermant au moins une fibre optique (3, 103), ledit tube extérieur étant disposé à l'extérieur de la gaine métallique, l'ensemble adaptateur d'extrémité comprenant un adaptateur d'extrémité (10, 110) en métal ayant une forme basique d'entonnoir et ayant un intérieur creux (12) et une première extrémité ouverte (14) et une seconde extrémité ouverte (16), dont la première extrémité ouverte (14) a un diamètre inférieur à celui de la seconde extrémité ouverte (16), l'adaptateur d'extrémité étant disposé autour de la gaine métallique du câble à fibre optique, la première extrémité ouverte (14) de l'adaptateur d'extrémité étant soudée ou brasée sur une surface extérieure de la gaine métallique (5) dans une première zone de soudage (24) et l'ensemble adaptateur d'extrémité comprenant en outre un premier dispositif de contrôle de température (18, 20 ; 25) inséré entre la gaine métallique (5) et l'au moins une fibre optique (3).

2. Ensemble adaptateur d'extrémité selon la revendication 1, dans lequel le premier dispositif de contrôle de température comprend un premier dispositif de refroidissement comprenant une conduite de refroidissement (18) insérée entre la gaine métallique (5) et l'au moins une fibre optique (3) et entourant ladite au moins une fibre optique au moins en-dessous de la première zone de soudage (24).

3. Ensemble adaptateur d'extrémité selon la revendication 2, dans lequel le premier dispositif de refroidissement comprend une admission de gaz (20) au moyen de laquelle un gaz de refroidissement peut être fourni à la conduite de refroidissement (18) et autour de l'au moins une fibre optique (3), au moins en-dessous de la première zone de soudage (24).

4. Ensemble adaptateur d'extrémité selon l'une quelconque des revendications 1 à 3, dans lequel le premier dispositif de contrôle de température comprend un dispositif de mesure de température (25).

5. Ensemble adaptateur d'extrémité selon l'une quelconque des revendications 1 à 4, celui-ci comprenant un second dispositif de mesure de température (32, 34, 36 ; 35) inséré dans l'intérieur creux (12) de l'adaptateur d'extrémité (10) à la seconde extrémité ouverte (16) de l'adaptateur d'extrémité (10) et situé à l'extérieur de la gaine métallique (5).

6. Ensemble adaptateur d'extrémité selon la revendication 5, dans lequel le second dispositif de contrôle de température comprend un second dispositif de refroidissement comprenant au moins une conduite de refroidissement (32, 34) insérée dans l'intérieur creux (12) de l'adaptateur d'extrémité (10) et à l'extérieur de la gaine métallique (5) et l'au moins une conduite de refroidissement est connectée à une conduite d'admission (36) pour du gaz de refroidissement.

7. Ensemble adaptateur d'extrémité selon l'une quelconque des revendications 5 à 6, dans lequel le second dispositif de contrôle de température comprend un équipement de mesure (35) inséré dans l'intérieur creux.

8. Ensemble adaptateur d'extrémité selon l'une quelconque des revendications 1 à 7, dans lequel un tuyau sous vide (22) est inséré dans l'intérieur creux (12).

9. Ensemble de connexion de câble à fibre optique apte à connecter un câble à fibre optique à un dispositif, l'ensemble de connexion comprenant un premier câble à fibre optique (1) comprenant un tube extérieur (8) et une gaine métallique (5) renfermant au moins une fibre optique (3), ledit tube extérieur étant disposé à l'extérieur de la gaine métallique, ledit câble à fibre optique étant pourvu d'un ensemble adaptateur d'extrémité (17) selon l'une quelconque des revendications 1 à 8 et comportant en outre au moins une pièce d'extrémité de fibre optique (4) dépassant de la gaine métallique, l'ensemble de connexion comprenant en outre un tube de jonction (26, 56) disposé au-dessus d'au moins une partie de l'adaptateur d'extrémité et au-dessus de l'au moins une pièce d'extrémité de fibre optique (4) dépassant de la gaine métallique, lequel tube de jonction a une première extrémité ouverte qui est soudée ou brasée sur une surface externe de l'adaptateur d'extrémité dans une seconde zone de soudage (30) et a une seconde extrémité ouverte qui est soudée ou brasée sur le dispositif (100, 50).

10. Ensemble de connexion de câble à fibre optique selon la revendication 9, dans lequel le dispositif est un second câble à fibre optique (100) comprenant une gaine métallique renfermant au moins une fibre optique (103) pourvue d'un ensemble adaptateur d'extrémité (117) selon l'une quelconque des revendications 1 à 8 et comportant en outre au moins une pièce d'extrémité de fibre optique (104) dépassant de la gaine métallique, la pièce d'extrémité de fibre optique (4) du câble à fibre optique (1) étant épissée avec une pièce d'extrémité de fibre optique (104) du second câble à fibre optique (100), une jonction épissée (29) étant obtenue, le tube de jonction (26) étant disposé sur la jonction épissée (29) et la seconde extrémité ouverte du tube de jonction étant soudée ou brasée à l'adaptateur d'extrémité (110) du second câble à fibre optique (100) .

11. Ensemble de connexion de câble à fibre optique selon la revendication 10, dans lequel le premier câble à fibre optique (1) est apte à recevoir le tube de jonction (26) pour un stockage externe sur celui-ci dans une position temporaire depuis laquelle il est mobile vers sa position finale sur la jonction épissée (29) où il est soudé ou bras aux adaptateurs d'extrémité des premiers et second câbles à fibre optique respectifs (1, 100).

12. Ensemble de connexion de câble à fibre optique selon la revendication 9, dans lequel la seconde extrémité ouverte du tube de jonction (56) est soudée ou brasée à une ouverture (54) d'une paroi (52) du dispositif (50) afin de créer un accès au dispositif pour la pièce d'extrémité de l'au moins une fibre optique (4) du premier câble à fibre optique (1).

13. Ensemble de connexion de câble à fibre optique selon la revendication 12, dans lequel le dispositif (50) est une boîte de jonction destinée à être connectée à un ou plusieurs câbles à fibre optique.

14. Ensemble de connexion de câble à fibre optique selon l'une quelconque des revendications 9 à 13, dans lequel le tube de jonction (26, 56) est pourvu d'au moins un manchon de refroidissement externe amovible (37) .

15. Procédé d'obtention d'une connexion de câble à fibre optique entre le premier câble à fibre optique (1) et un dispositif (50 ; 100), lequel câble à fibre optique comprend un tube extérieur (8) et une gaine métallique (5) renfermant au moins une fibre optique (3, 103) ledit tube extérieur étant disposé à l'extérieur de la gaine métallique, ce procédé comprenant :
- la préparation d'une extrémité du câble à fibre optique en enlevant la gaine métallique sur une longueur de câble à optique et en obtenant ainsi au moins une pièce d'extrémité de fibre optique (A),
- le montage d'un ensemble adaptateur d'extrémité (17, 117) selon l'une quelconque des revendications 1 à 8 autour de la gaine métallique dudit câble à fibre optique, et le soudage ou le brasage de l'adaptateur d'extrémité à la gaine métallique dans une première zone de soudage tout en contrôlant la température de la première zone de soudage au moyen du premier dispositif de contrôle de température (B),
- en option, le retrait du premier dispositif de contrôle de température (C),
- la préparation d'un tube de jonction doté d'une première et d'une seconde extrémité ouverte et à monter sur au moins une partie de l'adaptateur d'extrémité et l'au moins une pièce d'extrémité de fibre optique du câble à optique (D),
- le montage dudit tube de jonction sur au moins une partie de l'adaptateur d'extrémité et l'au moins une pièce d'extrémité de fibre optique du câble à fibre optique et le soudage ou le brasage de la première extrémité ouverte du tube de jonction sur une surface externe de l'adaptateur d'extrémité dans une seconde zone de soudage (E), et
- le soudage ou le brasage de la seconde extrémité ouverte du tube de jonction sur le dispositif (F) .

16. Procédé selon la revendication 15, comprenant la prévision du dispositif sous la forme d'un second câble à optique comprenant une gaine métallique renfermant au moins une fibre optique, et la préparation de l'extrémité du second câble à fibre optique en analogie avec l'extrémité du premier câble à fibre optique et le montage d'un ensemble adaptateur d'extrémité selon l'une quelconque des revendications 1 à 8 sur ladite extrémité du second câble à fibre optique, et le soudage ou le brasage de l'adaptateur d'extrémité à la gaine métallique dans une première zone de soudage du second câble à fibre optique tout en contrôlant la température de ladite première zone de soudage au moyen du premier dispositif de contrôle de température, en option l'enlèvement du le premier dispositif de contrôle de température, l'épissage d'une pièce d'extrémité de fibre optique du premier câble à fibre optique avec une pièce d'extrémité de fibre optique du second câble à fibre optique et l'obtention d'une jonction épissée, le montage du tube de jonction sur la jonction épissée et le soudage ou le brasage de la seconde extrémité ouverte du tube de jonction sur une surface externe de l'adaptateur d'extrémité du second câble à fibre optique dans une seconde zone de soudage.

17. Procédé selon la revendication 15, dans lequel la préparation d'un tube de jonction pouvant être monté sur au moins une partie de l'adaptateur d'extrémité et l'au moins une pièce d'extrémité de fibre optique est suivi par le soudage ou le brasage de la seconde extrémité ouverte du tube de jonction à une ouverture d'une paroi du dispositif, et 1 »insertion de l'au moins une pièce d'extrémité de fibre optique du câble à optique dans le dispositif via le tube de jonction avant de monter le tube de jonction sur au moins une partie de l'adaptateur d'extrémité et le soudage ou le brasage de la première extrémité ouverte du tube de jonction sur une surface externe de l'adaptateur d'extrémité dans une seconde zone de soudage.

18. Procédé selon l'une quelconque des revendications 15 à 17, comprenant le contrôle de la température dans l'intérieur creux de l'adaptateur d'extrémité pendant le soudage dans la seconde zone de soudage au moyen du second dispositif de contrôle de température.

19. Procédé selon l'une quelconque des revendications 15 à 18, comprenant le remplissage de la seconde extrémité ouverte de l'adaptateur d'extrémité avec un matériau de remplissage.

20. Procédé selon l'une quelconque des revendications 15 à 19, comprenant le placement d'un tube rétracté sur le tube de jonction.
